# EUROPEAN PATENT APPLICATION

(11) **EP 4 414 222 A1**
(43) Date of publication of application: **14.08.2024**
(21) Application number: 23155637.4
(22) Date of filing: 08.02.2023
(51) Int. Cl.: B60R 21/013, G06N 3/045

(54) **COMPUTER-IMPLEMENTED METHOD FOR TRAINING OF A MACHINE LEARNING MODEL IN VEHICLE ACCIDENT EVENT ASSESSMENT**

(71) Applicant: Autoliv Development AB, 447 83 Vårgårda (SE)
(72) Inventor: Ahmed, Jawwad, 447 37 Vårgårda (SE); Alkhoury, Ziad, 95800 Paris (FR)
(74) Representative: Westpatent AB

(57) **Abstract**

The present disclosure relates to a computer-implemented method for training of a machine learning model in vehicle accident event assessment. The method comprises implementing (S100) the machine learning model, and preparing (S200) training data by obtaining and automatically acquiring (S210) sensor data generated from vehicle sensors (2, 3; 4, 5). The method further comprises applying data augmentation on the collected data to artificially increase the amount of collected data acquired from each sensor such that an augmented data set is acquired for each sensor.

For each sensor (2, 3; 4, 5), applying data augmentation (5220) comprises transforming (S221) the collected data to apply to a plurality of different sensor mounting positions and/or a plurality of different sensor mounting orientations within a certain sensor mounting area (6, 7), such that a further data set is obtained, the augmented data set comprising the collected data and the further data set. The method further comprises training (S300) the machine learning model using the augmented data set for each sensor (2, 3; 4, 5).

## Description

The present disclosure relates to an improved computer-implemented method for training of a machine learning model in vehicle accident event assessment.

Vehicle accident events occur when riding a bicycle, scooter, motorcycle (MC) and the like, for example due to skidding, slipping, losing control of vehicle, crashing with another vehicle or object etc. Falls related to a running vehicle are often more abrupt, and require a faster handling than a fall occurring for a walking person that for example trips or slips.

In particular MCs can be involved in many crashes and many of them can result in severe injuries or can turn fatal. Part of the reason is the more exposed nature of the rider on the MC as compared to the driver in a car. Also, there are no restraints on the MC such as a seat belt as in a car. There are also other motion dynamics which makes the MC rider far more vulnerable in case of accident or a crash. Having MCs with integrated airbag systems is an emerging technology which allows to reduce the risk of severe injury or fatality in case of an accident, in particular in case of a frontal crash or slightly angled crash helping to resist the rider from being thrown out of the MC as a result of the crash. This can be lifesaving when used effectively.

Furthermore, an MC driver may wear a vest that can be equipped with one or more airbags or which inflates itself, or a smart helmet with one or more airbags, which are adapted to provide protection to the MC rider that wears at least one of the vest and the helmet when the MC rider is thrown away from the MC after the crash. Such a helmet may also be equipped with one or more devices that can issue one or more types of warnings. Other protective pieces of garment are conceivable, such as for example belts.

However, a real-time airbag triggering system is required to detect a crash a in a few milliseconds and then trigger a signal to inflate the airbag.

Most approaches typically involve observing changes in velocity or acceleration over time to infer a crash or other type of accident for the vehicle. Although this approach works relatively well, it is limited in terms of flexibility, particularly related to varying situations such as speed, angle, and other aspects in which a crash can happen.

It is therefore desired to provide an accurate real-time airbag triggering system for MCs and other two- or three-wheeled vehicles, where the above shortcomings are alleviated.

This is achieved by means of a computer-implemented method for training of a machine learning model in vehicle accident event assessment comprising vehicle accident event detection for a two-wheeled or a three-wheeled vehicle. The method comprises implementing the machine learning model, and preparing training data. Preparing training data comprises obtaining and automatically acquiring sensor data generated from sensors positioned on the vehicle and being used for collecting data, and applying data augmentation on the collected data to artificially increase the amount of collected data acquired from each sensor. In this way, an augmented data set is acquired for each sensor.

For each sensor, applying data augmentation comprises transforming the collected data to apply to a plurality of different sensor mounting positions and/or a plurality of different sensor mounting orientations within a certain sensor mounting area, such that a further data set is obtained. The augmented data set comprises the collected data and the further data set. The method further comprises training the machine learning model using the augmented data set for each sensor.

This means that data augmentation is applied to artificially increase the collected data, the training data, to be much larger than the original training data, adding new artificially generated data which was not there in the first place but is generated to provide a more robust machine learning model.

For example, the sensors may not be the same and/or with slightly different placements, or a crash might have occurred at a slightly higher speed. Since the machine learning model can be trained using the augmented data it will be much more robust to real-world irregularities.

According to some aspects, applying data augmentation comprises at least one of
- applying suitable rotation augmentations for the motion sensors where sensor data is applied small orientation along certain axis to represent variations in sensor mounting orientation on the vehicle;
- applying suitable noise augmentation such as gaussian noise to represent the noisy data from a certain sensor; and
- applying first amplitude scaling data augmentation to represent changes in perceived intensity of motion acceleration at different mounting positions of the sensor on MC which are in mutual proximity.

The augmentations can thus be obtained in many different ways, where the above augmentations for example are suitable for handling a plurality of different sensor mounting positions and/or a plurality of different sensor mounting orientations within a certain sensor mounting area.

According to some aspects, at least two sensors are positioned within a sensor mounting area, the machine learning model for the sensors being trained using the same augmented data set.

The enables a fully trained robust backbone machine learning model to be obtained for each sensor mounting area and be used for one or more sensors at adjacent positions, where these positions are allowed to vary slightly within the sensor mounting area.

According to some aspects, when the sensor data acquired from at least two of the sensors positioned within the same sensor mounting area are indicative of the occurrence of an accident within a certain predefined time period, at least one safety measure is triggered, otherwise no safety measure is triggered.

This minimizes the risk of unintentional triggering of the safety measures, for example an active safety system, using a multi-sensor arrangement. This is particularly useful in case of hard to detect scenarios which very much seem like a crash or other type of vehicle accident, but are not.

According to some aspects, applying data augmentation comprises at least one of
- applying second amplitude scaling data augmentation to represent various speeds of crash dynamics of the vehicle;
- applying time compression/de-compression data augmentation to represent the rate at which collision dynamics unfold; and
- applying segment of a suitable length and position in the signal scrambled with a suitable intensity to represent noise or garbage data in the signal due to an error.

The augmentations can thus be obtained in many different ways, where the above augmentations for example are suitable for the case where a vehicle accident must be detected by the at least two of the sensors, and within the bounds of limited time period to be considered verified and registered.

According to some aspects, the sensors comprise at least one of motion sensors, 3D sensors, accelerometers, gyroscopes and/or cameras. This means that many types of available and well-known sensors can be used.

According to some aspects, the further data set is used to cover possible deployment scenarios for which there are lack of data in the originally collected data.

According to some aspects, the further data set is used to increase robustness regarding various changes in vehicle speed, vehicle weight and signal errors due to temporary or permanent malfunctioning of sensors during crash scenarios.

This sort of diverse training data is a key to train robust and flexible machine learning models in the future.

The present disclosure also relates to a computer programs, control units, and systems that are associated with the above advantages.

Accordingly, it is here appreciated that the computer-implemented methods, the computer programs and the computer readable mediums, all as described herein, and in accordance with the present disclosure, may be realized in hardware, such as, the control unit arrangements and the devices, all as described herein, as well as, in the systems, as described herein. The hardware such as the control unit arrangements all as described herein, as well as, the systems, as described herein, are then arranged to perform the computer-implemented methods, and the computer programs, whereby the same advantages and effects are obtained as discussed for the computer-implemented methods herein.

### BRIEF DESCRIPTION OF DRAWINGS

The present disclosure will now be described more in detail with reference to the appended drawings, where:
- Figure 1: schematically illustrates a user who rides a motor bike with integrated sensors;
- Figure 2: schematically illustrates a control unit;
- Figure 3: shows an example computer program product; and
- Figure 4A-4B: show flowcharts for methods according to the present disclosure.

### DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

Modern data driven approaches based on ML (Machine Learning) and DL (Deep Learning) provide more flexibility to automatically learn from the provided crash data, driving data from various roads and other stress tests. Also, these methods can adopt to the newer crash scenarios, vehicles, and variable as more and more data is available. Essentially, they can be retrained and learn new crash scenarios when provided with newer data.

Normally the ML-based methods are specific about the various aspects of the system on which they are trained on. For example, if they are trained on data collected from a specific sensor position on a vehicle in a specific orientation etc., then they cannot be used with a good performance on another sensor position even on the same vehicle with the same sensor type.

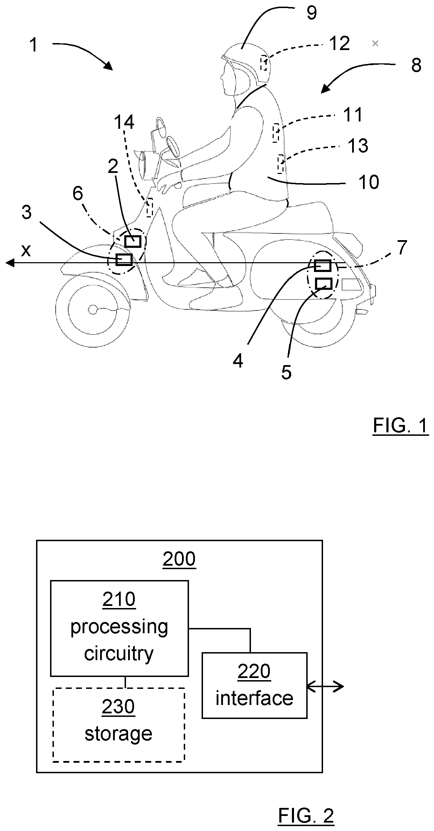

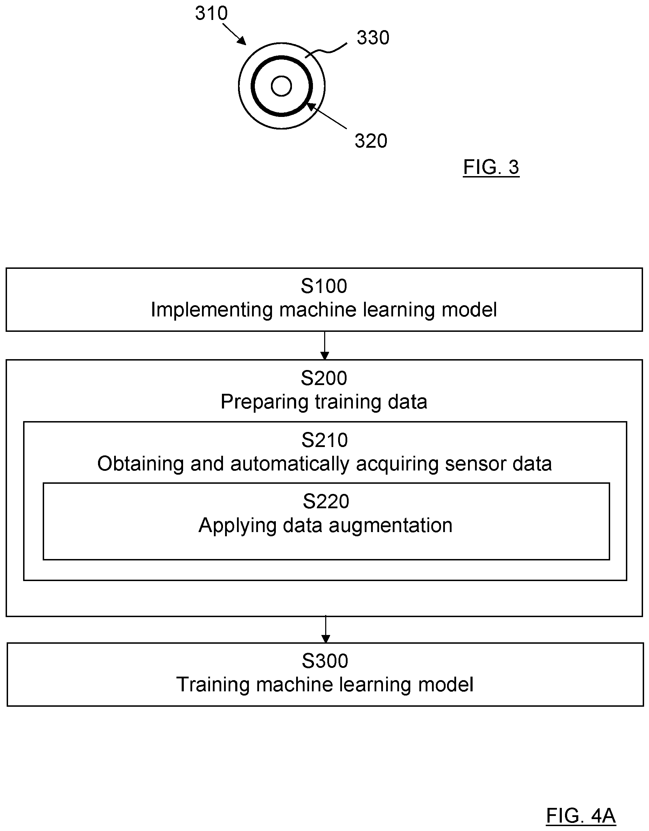

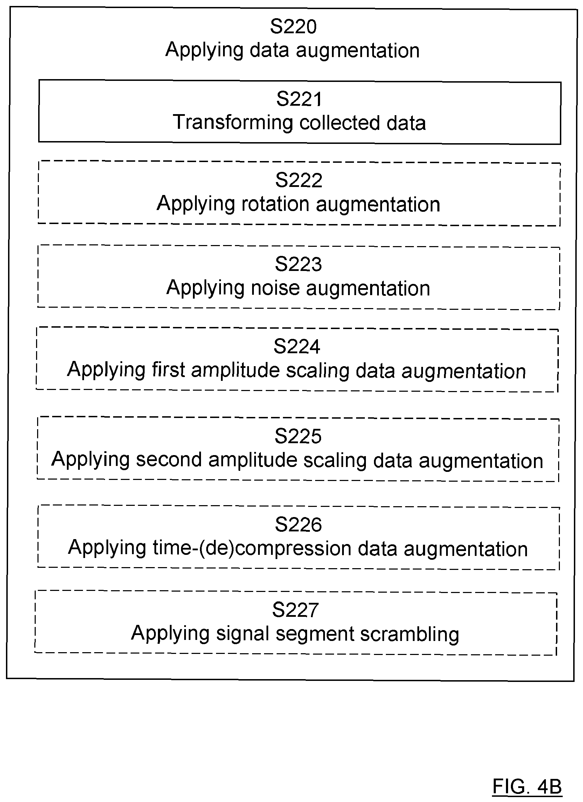

With reference to Figure 1, Figure 4A and Figure 4B, the present disclosure relates to a computer-implemented method for training of a machine learning model in vehicle accident event assessment comprising vehicle accident event detection for a two-wheeled or a three-wheeled vehicle 1. The method comprises implementing S100 the machine learning model, and preparing S200 training data. Preparing S200 training data comprises obtaining and automatically acquiring S210 sensor data generated from sensors 2, 3; 4, 5 positioned on the vehicle 1 and being used for collecting data.

According to some aspects, vehicle accident event assessment also comprises vehicle accident event detection, vehicle accident event characterization and/or computation of accident event risk probability.

With reference to Figure 1, there is a subject 8 in the form of a user 8 riding a motor bike 8, the user 8 wearing a smart protection helmet 9 and a protection vest 10. According to some aspects, at least one of the helmet 9 and the vest 10 comprises one or more airbags 12, 13 which are adapted to provide protection to the user 8 that wears at least one of the vest 10 and the helmet 9 when the user 8 is thrown away from the MC after the crash. Such a helmet 9 may also be equipped with one or more devices that can issue one or more types of warnings. Other protective pieces of garment are conceivable, such as for example belts. One or more airbags 14 may also be integrated with the vehicle 1.

The present disclosure is applicable for users that travelling on, or in, any kind of two-wheeled or a three-wheeled vehicle.

Sensor data are typically, but not exclusively, collected from, i.e. obtained from, sensors 2, 3, 4, 5, e.g. motion sensors, comprised in, e.g. mounted on, the vehicle 1, for example 3d sensors, such as accelerometers to measure the acceleration in 3 dimensions, as well as, gyroscope to measure the rotational speed in 3 dimensions. According to some aspects, the sensors 2, 3; 4, 5 comprise at least one of motion sensors, 3D sensors, accelerometers, gyroscopes and/or cameras.

This means that many types of available and well-known sensors can be used.

According to some aspects, as illustrated in Figure 2, the subject 8 wears means 11 for providing a position of the subject 8 and communicating said position. Such means 11 can comprise any type of suitable positioning system, such as for example GPS or GNSS (Global Navigation Satellite Systems), and any type of wireless communication system. Such GPS information may also be used to deduce the speed of the vehicle which can provide additional input for the crash detection algorithm. For example, an airbag may only be triggered when passing a speed limit such as for example 20kmph. Said means can be comprised in the vest 10 or any suitable type of garment or wearable device.

The vehicle accident event detection, for example being accomplished by means of a vehicle accident event detection algorithm, relies on detecting patterns of motion which belong to a vehicle accident such as a crash where the vehicle 1 moves in a sudden and unexpected manner.

With continued reference also to Figure 4A and Figure 4B, preparing S200 training data further comprises applying S220 data augmentation on the collected data to artificially increase the amount of collected data acquired from each sensor 2, 3; 4, 5 such that an augmented data set is acquired for each sensor 2, 3; 4, 5. For each sensor 2, 3; 4, 5, applying data augmentation S220 comprises transforming S221 the collected data to apply to a plurality of different sensor mounting positions and/or a plurality of different sensor mounting orientations within a certain sensor mounting area 6, 7, such that a further data set is obtained, the augmented data set comprising the collected data and the further data set.

Configuration parameters used when transforming S221 the collected data are according to some aspects driven by the heterogeneity requirements in an envisioned target deployment scenario.

The method further comprises training S300 the machine learning model using the augmented data set for each sensor 2, 3; 4, 5.

This means that data augmentation is applied to artificially increase the collected data, the training data, to be much larger than the original training data, adding new artificially generated data which was not there in the first place but is generated to provide a more robust machine learning model that is better prepared to predict crash/non-crash scenarios when the real world heterogeneity kicks in. For development of a high quality machine learning model, a lot of relevant training is important, where collecting crash data for vehicles such as MCs is quite expensive.

According to some aspects, the augmented data enables artificially creating data for scenarios for which the originally collected data were not applicable. For example, the sensors may not be the same and/or with slightly different placements, or a crash might have occurred at a slightly higher speed. Since the machine learning model can be trained using the augmented data it will be much more robust to real-world irregularities.

For example, if it is known or anticipated that orientation variation in deployment of a certain sensor position can be no larger than ±20% along an x-axis, for example as indicated in Figure 1, then rotation augmentations are only generated within this range. Furthermore, if a certain sensor position will have a known vibration pattern, this can introduced to the augmented data.

According to some aspects, at least two sensors 2, 3; 4, 5 are positioned within a sensor mounting area 6, 7, the machine learning model for the sensors 2, 3; 4, 5 being trained using the same augmented data set. By means of the present disclosure, a fully trained robust backbone machine learning model for each sensor mounting area 6, 7 will result. This machine learning model can be used for one or more sensors at adjacent positions, where these positions are allowed to vary slightly within the sensor mounting area 6, 7. If more than two sensors and algorithms are involved, then an alternate scheme such as majority voting or similar can be used.

According to some aspects, the utility of such a machine learning model is that its robust against small variations in sensor placement, e.g., various possibilities in each sensor mounting area 6, 7 such as small rotations, different type of sensor hardware etc. This becomes very useful in scenarios where data for algorithm development was collected from certain sensors and sensor positions, but during production it was found out a sensor cannot be placed exactly the same position but a position in vicinity is possible, for example due to various constraints and sensor orientation changes. Even sensors used during the production might be different from sensors used for data collection during development. The same carefully trained machine learning model can now be deployed on a single sensor, or multiple sensors, if they are in the vicinity of the intended position, i.e., in a sensor mounting area 6, 7. The machine learning model will be robust on those positions in the vicinity to small changes in the position, orientation or noise profile changes from a different type of sensor or small amplitude differences due to change in the type of sensor deployed.

For different sensor mounting areas 6, 7 different corresponding robust backbone machine learning models are required. This flexibility can be very beneficial for vehicle manufacturers during system integration when various constraints have to be balanced when putting the system electronics in production vehicle.

The mounting areas 6, 7 can have a certain size that is not exactly specified, but due to numerous parameters regarding collected data, type of sensor etc. For example, a machine learning model generated for a mounting area at a footrest position may not be applicable for a headlamp position to do a crash prediction. This is due to the fact that the mounting areas are not in sufficient vicinity.

According to some aspects, when the sensor data acquired from at least two of the sensors 2, 3; 4, 5 positioned within the same sensor mounting area 6, 7 are indicative of the occurrence of an accident within a certain predefined time period, at least one safety measure is triggered, otherwise no safety measure is triggered.

Essentially a crash or other type of vehicle accident must be detected by the at least two of the sensors 2, 3; 4, 5, and within the bounds of limited time period to be considered verified and registered. This minimizes the risk of unintentional triggering of the safety measures, for example an active safety system, using a multi-sensor arrangement. This is particularly useful in case of hard to detect scenarios which very much seem like a crash or other type of vehicle accident, but are not.

According to some aspects, with renewed reference to Figure 4A and Figure 4B, applying data augmentation S220 comprises at least one of
- Applying S222 suitable rotation augmentations for the motion sensors where sensor data is applied small orientation along certain axis to represent variations in sensor mounting orientation on the vehicle.
- Applying S223 suitable noise augmentation such as gaussian noise to represent the noisy data from a certain sensor.
- Applying S224 first amplitude scaling data augmentation to represent changes in perceived intensity of motion acceleration at different mounting positions of the sensor on MC which are in proximity.

According to some aspects, the above augmentations are suitable for handling a plurality of different sensor mounting positions and/or a plurality of different sensor mounting orientations within a certain sensor mounting area 6, 7.

According to some further aspects, with continued reference to Figure 4A and Figure 4B, applying data augmentation S220 comprises at least one of
- applying S225 second amplitude scaling data augmentation to represent various speeds of crash dynamics of the vehicle;
- applying S226 time compression/de-compression data augmentation to represent the rate at which collision dynamics unfold;
- applying S227 segment of a suitable length and position in the signal scrambled with a suitable intensity to represent noise or garbage data in the signal due to an error.

According to some aspects, the above augmentations are suitable for the case where a vehicle accident must be detected by the at least two of the sensors 2, 3; 4, 5, and within the bounds of limited time period to be considered verified and registered. More than one of the augmentations can be used depending on the requirements of deployment, the data augmentations equating to data transformations carefully selected directly applied on the originally collected data based on requirements of a deployment scenario.

The present disclosure enables generating machine learning models which are more tolerant to small variations in the position, orientation of vehicle sensors 2, 3; 4, 5. Data augmentations during the development of the machine learning models allow to initially train backbone machine learning models using techniques such as contrastive learning etc. These machine learning models can then be fine-tuned on the relevant training data such as crash data, abuse data and road driving data.

According to some aspects, the further data set that results from data augmentation is used to cover possible deployment scenarios for which there are lack of data in the originally collected data. This lack of data may or example be due to cost, time or technical restrictions when conducting those experiments. This sort of diverse training data is a key to train robust and flexible machine learning models in the future.

According to some aspects, the further data set that results from data augmentation may also be used to increase robustness regarding various changes in vehicle speed, vehicle weight and signal errors due to temporary or permanent malfunctioning of sensors during crash scenarios.

Figure 2 schematically illustrates, in terms of a number of functional units, the components of a control unit 200 according to an embodiment.

Processing circuitry 210 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 230. The processing circuitry 210 may further be provided as at least one application specific integrated circuit (ASIC), or field programmable gate array (FPGA) .

Particularly, the processing circuitry 210 is configured to cause the control unit 200 to perform a set of operations, or steps. These operations, or steps, were discussed above in connection to the various radar transceivers and methods. For example, the storage medium 230 may store the set of operations, and the processing circuitry 210 may be configured to retrieve the set of operations from the storage medium 230 to cause the control unit 200 to perform the set of operations. The set of operations may be provided as a set of executable instructions. Thus, the processing circuitry 210 is thereby arranged to execute methods and operations as herein disclosed.

The storage medium 230 may also comprise persistent storage, which, for example, can be any single one or combination of magnetic memory, optical memory, solid state memory or even remotely mounted memory.

The control unit 200 may further comprise a communications interface 220 for communications with at least one other unit. As such, the communications interface 220 may comprise one or more transmitters and receivers, comprising analogue and digital components and a suitable number of ports for wired or wireless communication.

The processing circuitry 210 is adapted to control the general operation of the control unit 200 e.g. by sending data and control signals to the external unit and the storage medium 230, by receiving data and reports from the external unit, and by retrieving data and instructions from the storage medium 230. Other components, as well as the related functionality, of the control unit 200 are omitted in order not to obscure the concepts presented herein.

Figure 3 shows a computer program product 310 comprising computer executable instructions 320 arranged on a computer readable medium 330 to execute any of the methods disclosed herein.

According to some aspects, the present disclosure also relates to a device for vehicle accident event assessment, for communication of information, wherein the information comprises information from the vehicle accident event assessment, and for enabling the computer-implemented method for vehicle accident event assessment, wherein the computer-implemented method for fall assessment is as described herein. The device comprises a machine learning model, sensors collecting data from users, means for obtaining data, means for processing data and means for communication of information. The device comprises the computer program, and/or the computer readable medium, both, as described herein, and for applying the computer-implemented method for vehicle accident event assessment, and for communication of information, wherein the information comprises information from the vehicle accident event assessment, as described herein.

According to some aspects, the device for vehicle accident event assessment according to the present disclosure, as described herein, is disclosed, wherein the device is comprised in a vehicle 1 and comprises sensor/s 2, 3, 6, 7 comprising accelerometer/s and/or gyroscope/s.

According to some aspects, the present disclosure also relates to a system for vehicle accident event assessment, for communication of information, wherein the information comprises information from the vehicle accident event assessment, and for enabling the computer-implemented method for vehicle accident event assessment. The computer-implemented method for vehicle accident event assessment is as described herein.

The system comprises a machine learning model, sensors 2, 3, 4, 5, means for collecting data from the sensors 2, 3, 4, 5, means for obtaining data, means 200 for processing data and means for communication of information. The system comprises the computer program product 310 according to the above.

The information comprises information from the vehicle accident event assessment, as described herein, and/or the computer readable medium 330 comprising the computer program 310 product comprising computer readable instructions 320 for applying the computer-implemented method for vehicle accident event assessment, and for communication of information, wherein the information comprises information from the vehicle accident event assessment, as described herein.

According to some aspects, a system for vehicle accident event assessment, and for communication of information, is disclosed. The information comprises information from the vehicle accident event assessment, according to the present disclosure, as described herein, is disclosed. The system comprises one, or more, devices for vehicle accident event assessment, and for communication of information, wherein the information comprises information from the vehicle accident event assessment, as described herein.

The present disclosure relates to a system for training of a machine learning model in vehicle accident event assessment, for communication of information, for enabling implementing the machine learning model as described herein, and for enabling the preparation of training data as described herein. Vehicle accident event assessment comprises vehicle accident event detection, where the system comprises a machine learning model, sensors collecting data, means for obtaining data, means for processing data and means for communication of information. The system utilizes the computer program 310 as described herein, and/or the computer readable medium 330 as described herein.

## Claims

1. A computer-implemented method for training of a machine learning model in vehicle accident event assessment comprising vehicle accident event detection for a two-wheeled or a three-wheeled vehicle (1), where the method comprises
implementing (S100) the machine learning model, and
preparing (S200) training data,
where preparing (S200) training data comprises
obtaining and automatically acquiring (S210) sensor data generated from sensors (2, 3; 4, 5) positioned on the vehicle (1) and being used for collecting data;
applying (S220) data augmentation on the collected data to artificially increase the amount of collected data acquired from each sensor (2, 3; 4, 5) such that an augmented data set is acquired for each sensor (2, 3; 4, 5);
where applying data augmentation (S220) comprises, for each sensor (2, 3; 4, 5),
transforming (S221) the collected data to apply to a plurality of different sensor mounting positions and/or a plurality of different sensor mounting orientations within a certain sensor mounting area (6, 7), such that a further data set is obtained, the augmented data set comprising the collected data and the further data set; where the method further comprises
training (S300) the machine learning model using the augmented data set for each sensor (2, 3; 4, 5).

2. The computer-implemented method according to claim 1, wherein applying data augmentation (S220) comprises at least one of
- applying (S222) suitable rotation augmentations for the motion sensors where sensor data is applied small orientation along certain axis to represent variations in sensor mounting orientation on the vehicle;
- applying (S223) suitable noise augmentation such as gaussian noise to represent the noisy data from a certain sensor; and
- applying (S224) first amplitude scaling data augmentation to represent changes in perceived intensity of motion acceleration at different mounting positions of the sensor on MC which are in mutual proximity.

3. The computer-implemented method according to any one of the claims 1 or 2, wherein at least two sensors (2, 3; 4, 5) are positioned within a sensor mounting area (6, 7), the machine learning model for the sensors (2, 3; 4, 5) being trained using the same augmented data set.

4. The computer-implemented method according to claim 3, wherein, when the sensor data acquired from at least two of the sensors (2, 3; 4, 5) positioned within the same sensor mounting area (6, 7) are indicative of the occurrence of an accident within a certain predefined time period, at least one safety measure is triggered, otherwise no safety measure is triggered.

5. The computer-implemented method according to claim 4, wherein applying data augmentation (S220) comprises at least one of
- applying (S225) second amplitude scaling data augmentation to represent various speeds of crash dynamics of the vehicle;
- applying (S226) time compression/de-compression data augmentation to represent the rate at which collision dynamics unfold; and
- applying (S227) segment of a suitable length and position in the signal scrambled with a suitable intensity to represent noise or garbage data in the signal due to an error.

6. The computer-implemented method according to any one of the previous claims, wherein the sensors (2, 3; 4, 5) comprise at least one of motion sensors, 3D sensors, accelerometers, gyroscopes and/or cameras.

7. The computer-implemented method according to any one of the previous claims, wherein the further data set is used to cover possible deployment scenarios for which there are lack of data in the originally collected data set.

8. The computer-implemented method according to any one of the previous claims, wherein the further data set is used to increase robustness regarding various changes in vehicle speed, vehicle weight and signal errors due to temporary or permanent malfunctioning of sensors during crash scenarios.

9. A computer program (310) comprising computer readable instructions (320) for applying the computer-implemented method, and/or the preparation of training data, according to any one of claims 1-8, and/or a computer readable medium (330) comprising said computer program (310).

10. A computer program (310) comprising computer readable instructions (320) for a machine learning model according to any one of claims 1-8, and/or a computer readable medium (330) comprising said computer program (310).

11. A control unit (200), for training of a machine learning model, adapted to control at least, the implementing the machine learning model according to any one of claims 1-8, and/or the preparation of training data according to any one of claims 1-8.

12. A system for training of a machine learning model in vehicle accident event assessment, for communication of information, for enabling implementing the machine learning model according to any one of claims 1-8, and for enabling the preparation of training data according to any one of claims 1-8;
wherein vehicle accident event assessment comprises vehicle accident event detection;
where the system comprises a machine learning model, sensors collecting data, means for obtaining data, means for processing data and means for communication of information;
wherein the system utilizes the computer program (310) according to claim 9 or 10, and/or the computer readable medium (330) according to claim 9 or 10.
